Europäisches Patentamt

European Patent Office

Office européen des brevets

(11) Publication number: **0 207 273**
**B1**

# EUROPEAN PATENT SPECIFICATION

(45) Date of publication of patent specification: **08.03.89**

(51) Int. Cl.⁴: **G 03 G 15/04**, G 03 B 27/54

(21) Application number: **86106738.7**

(22) Date of filing: **16.05.86**

(54) A cooling device for a light source in a copying machine.

(30) Priority: **17.05.85 JP 106494/85**

(43) Date of publication of application:
**07.01.87 Bulletin 87/02**

(45) Publication of the grant of the patent:
**08.03.89 Bulletin 89/10**

(84) Designated Contracting States:
**DE FR GB**

(56) References cited:
DE-A-2 737 361
DE-U-7 426 491
US-A-4 095 881
US-A-4 411 516
PATENT ABSTRACTS OF JAPAN, vol. 3, no. 155
(E-160), 19th December 1979, page 145 E 160; &
JP-A-54 136 322
PATENT ABSTRACTS OF JAPAN, vol. 8, no. 286
(P-324)1723r, 27th December 1984; & JP-A-59
149 340

(73) Proprietor: **Dainippon Screen Mfg. Co., Ltd.**
**1-1, Tenjinkitamachi Teranouchi-agaru 4-chome**
**Horikawa-dori**
**Kamikyo-ku Kyoto 602 (JP)**

(72) Inventor: **Bessho, Yoshihiko**
**45-4 Koizumicho**
**Hikone Shiga (JP)**
Inventor: **Yamashita, Koji**
**81-19 Horiagecho**
**Oumihachiman Shiga (JP)**
Inventor: **Katayama, Masanori**
**891-27 Nishiimacho**
**Hikone Shiga (JP)**

(74) Representative: **Goddar, Heinz J., Dr. et al**
**FORRESTER & BOEHMERT Widenmayerstrasse**
**4/I**
**D-8000 München 22 (DE)**

## Description

The present invention relates to a cooling device for a light source in a copying machine, and in particular to a cooling device for a lighting assembly composed of a light source bulb and a reflector accommodated within a lamp body.

Generally, a high brightness lamp, such as a halogen lamp, is utilised for lighting an original in a copying machine. But, as such a high brightness lamp also radiates much heat, appliances near the lamp are apt to be adversely affected by the heat.

A prior cooling device for a light source in a copying machine, for example as disclosed in Japanese Provisional Patent Publication No. 136322 of 1979, is so constructed that a duct-like lamp body, which accommodates a long curved reflector and a light source bulb therein, is formed with an irradiation opening provided with a filter which is pervious to light but blocks infrared rays. The air heated within the lamp body by the light source may be discharged by blowing air into the body so as to cool the part of the light source bulb.

However, since the filter formed as a light-pervious heat-shield member is cooled only on the inside and the heat accumulated in it is radiated from its outer surface, appliance near the filter are not prevented from being heated thereby.

Therefore, the air around the filter is apt to be in motion as a result of the heat radiated from the filter. When the heated air extends into the light path focusing an image in the optical system of the copying machine, the copied image is reproduced in an out-of-focus radiation owing to the loss of image focus caused by the waving heated air.

The present invention is directed to solving the problems noted above, and has for its object to provide a cooling device for a light source in a copying machine, which is able to prevent the generation of heat waving of the air around the filter.

Accordingly, the present invention provides a cooling device for a light source in a copying machine, which comprises: a lamp body accommodating a reflector and a light source bulb therewithin; an irradiation opening provided in the lamp body opposite the reflector; light-pervious heat-shield members arranged spaced apart in the irradiation opening, at least a light-pervious heat-shield member nearest the light source bulb being composed of a heat-ray absorbing glass, the space formed between each pair of the heat-shield members communicating with the outside of the lamp body through cooling air inlets and communicating with a chamber accommodating the light source bulb through communication holes, and the chamber accommodating the bulb communicating with the outside of the lamp body through cooling air outlets, so that cooling air supplied from outside the lamp body passes in turn through the space between the heat-shield members and the chamber and is then discharged to the outside, thereby providing forced air cooling to the inside of the lamp body.

Since the light-pervious heat-shield members are disposed at suitable intervals in the irradiation opening of the lamp body so as to blow the open air for cooling between these members and provide air layers between each pair of them, the heat transfer to outside members is prevented by these air layers and then each pair of members are cooled effectively by cooling air flow passing therethrough. Especially, since the light-pervious heat-shield member on the light source side is so composed of a heat-ray absorption glass that heat rays radiated linearly from the light source bulb and the reflector may be absorbed and accumulated by the glass and the heat radiated from the glass may be removed by the cooling air flow passing through its outside space, the heat transfer to the outside members is blocked effectively. Further, since the cooling air flow passes through the spaces between the members and is discharged through the chamber accommodating the light source bulb within the lamp body, the chamber is also cooled effectively for optical appliances not to be adversely affected by the heat radiation from the lamp body.

In order that the invention may be readily understood, an embodiment thereof will now be described, by way of example, with reference to the accompanying drawings, in which:

Figure 1 is a vertical sectional view of a lamp body of a preferred embodiment of the present invention;

Figure 2 is a perspective view of an electrophotographic copying machine embodying the present invention; and

Figure 3 is a schematic sectional view on line X—X in Figure 2.

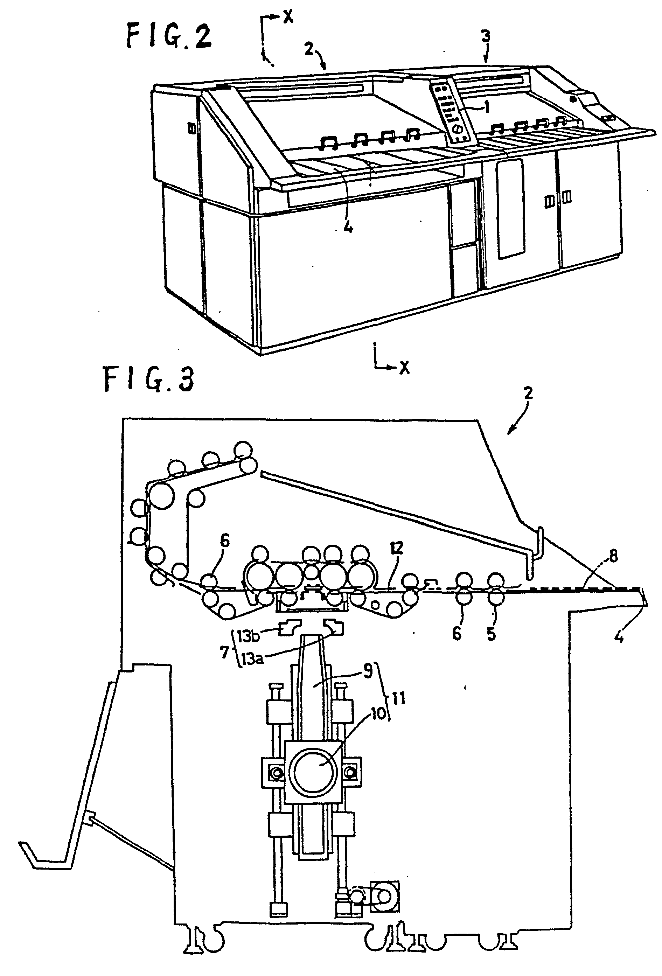

As shown in Figures 2 and 3, an electrophotographic copying machine comprises a centrally located control panel 1 at the front of the machine, original feeding and scanning equipment 2 to the left of the panel 1 and a reproduced image recording equipment 3 to the right of the panel 1. In the original feeding and scanning equipment 2, when an original is fed into the equipment with its image facing downwards on an original setter 4 the original is transported by feed rollers 5 and carriage rollers 6 and is illuminated by an original lighting device 7 on its way to an original receptacle.

While the original is carried along its pathway through equipment 2, the image of the original is exposed in focus through a slit onto a photosensitive drum (not shown in Figures) by a focussing optical system 11 composed of a pair of mirrors 9 and a lens 10 so as to produce a latent image thereon. Then the latent image is rendered visible by means of a toner development device (not shown in Figures) and thereupon the visible toner image is transferred onto a sheet of recording paper as a toner image in the recording equipment 3.

The original lighting device 7 is composed of a pair of lamp bodies 13a and 13b spaced apart along the path 12 of movement of the original by rollers 5 and 6 and arranged under path 12 so as to produce beams of light at right angles to the direction of movement of original. The lamp bodies 13a and 13b are disposed respectively to the front and to the rear of the optical axis of the focusing optical system, which axis is centred between the lamp bodies. The arrangement is such that the beams from the lamp bodies are directed to cross the original carrying pathway 12 in its plane and towards an elongate rectangular region crossing at right angles to the optical axis.

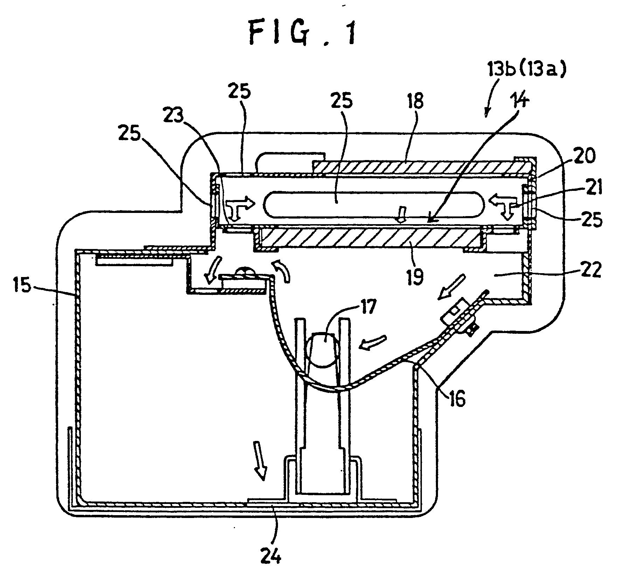

As each of the lamp bodies has the same construction, only the construction of the rear lamp body 13b will be explained hereinafter, by way of example, with reference to Figure 1.

The lamp body 13b comprises a duct-like casing 15 having a top wall provided with an irradiation opening 14. A long curved reflector 16 is fixed in the casing 15 and a plurality of straight tubular halogen lamps 17 are arranged in series longitudinally at the inside of the curved reflector 16 to constitute a light source.

A framework 20 is provided in the irradiation opening 14 of the casing 15 for supporting a heat-shield member which supports a heat resistance glass 18 and a heat-ray absorption glass 19 respectively above and below at suitable intervals. A space for a cooling air flow passage 21 is formed by the surrounding walls of the supporting framework 20 and the glasses 18 and 19 are positioned respectively above and below this passage. The cooling air flow passage 21 communicates with a chamber 22 accommodating the light source bulb through a series of communication holes 23. The chamber 22 communicates with the outside of the casing 15 through cooling air outlets 24 provided in the casing 15, and the passage 21 also communicates with the outside through cooling air inlets 25. The longitudinal side walls of the lamp body 13b are provided with cooling air inlets 25 arranged in zigzags, and the transverse side walls are provided with inlets 25 in the form of elongated holes as shown in Figure 1. These cooling air inlets 25 so communicate with a delivery portion of a blower (not shown in Figures) that the cooling air may be supplied forceably into the lamp body 13b so as to cool not only the heat resistance glass 18 and the heat absorption glass 19 but also the chamber 22 accommodating the light source bulb and the bulb itself.

Further, the cooling air outlets 24 may be connected to a suction side of an induced draft fan (not shown in Figures) so as to forceably air-cool the inside of the lamp body. A heat-ray absorption glass may be utilised instead of the heat resistance glass in the irradiation opening. Moreover, two plates of glass may be arranged so as to form dual cooling air flow passage.

As described above, a cooling device embodying the present invention is provided with light-pervious heat-shield members suitably spaced apart in an opening of a lamp body accommodating a reflector and a light source bulb, at least the member on the bulb side being composed of a heat-ray absorption glass, and cooling air is passed through the members, so that the heat rays radiated from the light source bulb can be absorbed by the heat-ray absorption glass to prevent the heat rays from being radiated to the outside of the lamp body. Further, the plural light-pervious heat-shield members are cooled by the cooling air supplied therebetween, so that the transfer of heat to the outer members is blocked in order to lessen substantially the heat rays radiated from the outer members. Consequently, since the heat waving of air near the lamp body, especially near the upper surface of the member is obviated, the reproduced image can be well focused and made distinct.

On the other hand, the cooling air supplied between the multiplex light-pervious heat-shield members is discharged to the outside of the lamp body through the chamber accommodating the light source bulb, so that the durability of the light source bulb can be improved substantially by the forced air cooling for the bulb.

The features disclosed in the foregoing description and/or in the accompanying drawings may, both separately and in any combination thereof, be material for realising the invention as claimed in diverse forms thereof.

**Claim**

A cooling device for a light source in a copying machine, which comprises: a lamp body (13a, 13b) accommodating a reflector (16) and a light source bulb (17) therewithin; an irradiation opening provided in the lamp body opposite the reflector; light-pervious heat-shield members (18, 19) arranged spaced apart in the irradiation opening, at least a light-pervious heat-shield member (19) nearest the light source bulb being composed of a heat-ray absorbing glass, the space formed between each pair of the heat-shield members communicating with the outside of the lamp body through cooling air inlets (25) and communicating with a chamber (22) accommodating the light source bulb (17) through communication holes (23), and the chamber accommodating the bulb communicating with the outside of the lamp body through cooling air outlets (24), so that cooling air supplied from outside the lamp body passes in turn through the space between the heat-shield members (18, 19) and the chamber (22) and is then discharged to the outside, thereby providing forced air cooling to the inside of the lamp body.

**Patentanspruch**

Kühlvorrichtung für die Lichtquelle eines Kopiergerätes, mit: einem einen Reflektor (16) und eine Lichtquellenbirne (17) aufnehmenden Lampenkörper (13a, 13b), eine in dem Lampenkörper dem Reflektor gegenüberliegend angeordnete Strahlenöffnung; lichtdurchlässige Hitzeschilder (18, 19), die mit Abstand voneinander in der Strahlenöffnung angeordnet sind, wobei wenigstens ein der Lichtquellenbirne unmittelbar benachbartes Hitzeschild aus einem Wärmestrahlen absorbierenden Glas besteht, der zwischen jedem Paar der Hitzeschilder gebildete Raum mit dem Äußeren des Lampenkörpers über Kühllufteinlässe (25) kommuniziert und mit einer Kammer (22), die die Lichtquellenbirne (17) aufnimmt, über Verbindungsbohrungen (23) kommuniziert, und die die Birne aufnehmende Kammer mit dem Äußeren des Lampenkörpers durch Kühlluftauslässe (24) kommuniziert, so daß die von dem Äußeren des Lampenkörpers gelieferte Kühlluft wiederum in den Raum zwischen den Hitzeschildern (18, 19) und der Kammer (22) gelangt und sodann nach außen abgeführt wird, wodurch eine Kühlluftzwangsführung zu dem Inneren des Lampenkörpers bewirkt wird.

**Revendication**

Dispositif de refroidissement pour une source de lumière dans un copieur-duplicateur, qui comprend un corps de lampe (13a, 13b) dans lequel sont logés un réflecteur (16) et une ampoule lumineuse (17); des organes (18, 19) de protection thermique, perméables à la lumière, disposés écartés dans l'ouverture d'irradiation, au moins un de ces organes (19) de protection thermique, perméable à la lumière, situé le plus près de l'ampoule lumineuse étant composé d'un verre absorbant les rayonnements thermiques, l'espace ménagé entre chaque paire d'organes de protection thermique communiquant avec l'extérieur du corps de lampe par des entrèes d'air de refroidissement (25) et communiquant avec une chambre (22), dans laquelle est logée l'ampoule lumineuse (17), par des trous de communication (23), et la chambre dans laquelle est logée l'ampoule communiquant avec l'extérieur du corps de lampe par des sorties d'air de refroidissement (24), de sorte que de l'air de refroidissement provenant de l'extérieur du corps de lampe passe tour à tour par l'espace compris entre les organes de protection thermique (18, 19) et la chambre (22) puis s'échappe à l'extérieur, assurant ainsi un refroidissement à l'air forcé de l'intérieur du corps de lampe.

# FIG.1

FIG.2

FIG.3

2